# EUROPEAN PATENT APPLICATION

(11) **EP 2 082 702 A1**
(43) Date of publication of application: **29.07.2009**
(21) Application number: 09380002.7
(22) Date of filing: 14.01.2009
(51) Int. Cl.: A61C 8/00

(54) **Device for shaping the maxillary sinus**

(30) Priority: 25.01.2008 ES 200800195
(71) Applicant: Ridao Dalmau, Marcela, 08186 Lliça d'Amunt Barcelona (ES)
(72) Inventor: Ridao Dalmau, Marcela, 08186 Lliça d'Amunt Barcelona (ES)
(74) Representative: Durán Moya, Carlos

(57) **Abstract**

The device comprises an external body (1) which can be fitted as an intermediate support to a tooth space in the jawbone, the body of which bears a longitudinally movable rod (4) the lower part of which is provided with a head (6) for shaping the base of the sinus cavity by progressive compression, the device having an element (10) for progressive advance of the rod bearing the adjusting head.

## Description

This invention relates to a device for shaping the cavity of the maxillary sinus, with appreciable characteristics of novelty and inventive step.

The device to which this invention relates is intended to be used in stomatology, in connection with the fixing of dental implants.

At the present time dental implants generally have the structure of a body with an external thread which can be inserted into the jawbone by screwing, providing a firm base for the subsequent fitting of false parts, mounting and/or supporting elements, etc.

A problem which arises in some cases is the small size of the sinus cavity, as a result of which the operator has difficulty in fitting the dental implant.

The object of this invention is to overcome the disadvantage mentioned by providing a device which can be used to shape the sinus cavity, above all with a view to enlarging it and in particular deepening it, for the purposes of achieving more appropriate dimensions for fitting the desired implant.

The essential features of the invention are defined in claim 1.

Dependent claims 2 to 9 define other features of the invention.

Essentially, the device to which this invention relates comprises a body which can be fixed in the jawbone and if necessary subsequently removed, which has an axial cavity intended to receive a removable rod or screw, the lower extremity of which has the desired shape for progressively shaping the cavity of the maxillary sinus with a view to increasing the ability of the latter to house a longer dental implant.

The external body has a thread of the self-tapping type, of a generally cylindrical structure with a tapering entry at the extremity, and also has an intermediate shoulder to provide a stop against the jawbone and a portion receiving the positioning tool, which is preferably provided with a resilient o-ring.

The movable screw or "piston" has a threaded portion, preferably with a fine thread, which threads into the opening in the external body mentioned and which has means for impulsion at the top, for example a small threaded cap, a butterfly nut, an aperture and pin, or other means.

Drawings illustrating a preferred embodiment of this invention are appended by way of an explanatory but non-limiting example in order to provide a better understanding.

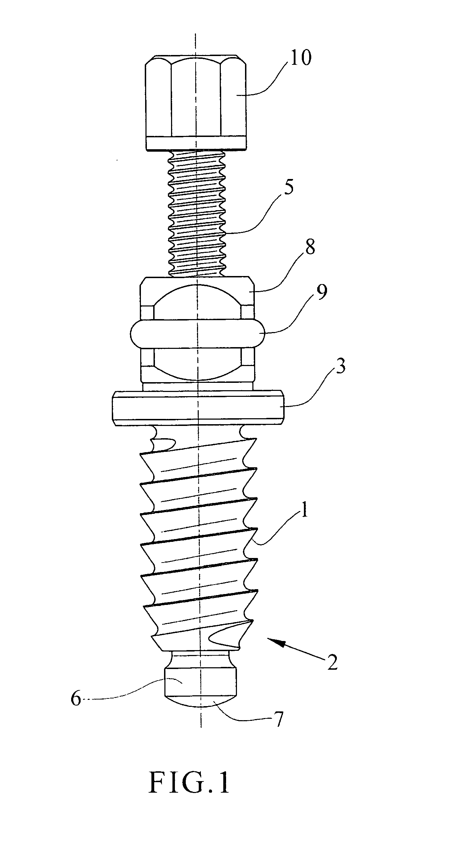

Figure 1 shows a view in elevation of the whole device to which this invention relates.

Figure 2 shows a longitudinal cross-section of the device in Figure 1.

As will be seen in the figures, the device to which this invention relates has an external body -1- acting as an intermediate body, intended to be fitted into a tooth space in the jawbone, for which purpose it has an external thread of the self-tapping type with a lower tapering entry -2-, and also an intermediate shoulder -3- which acts as a stop against the jawbone itself to limit the depth of penetration of body -1-.

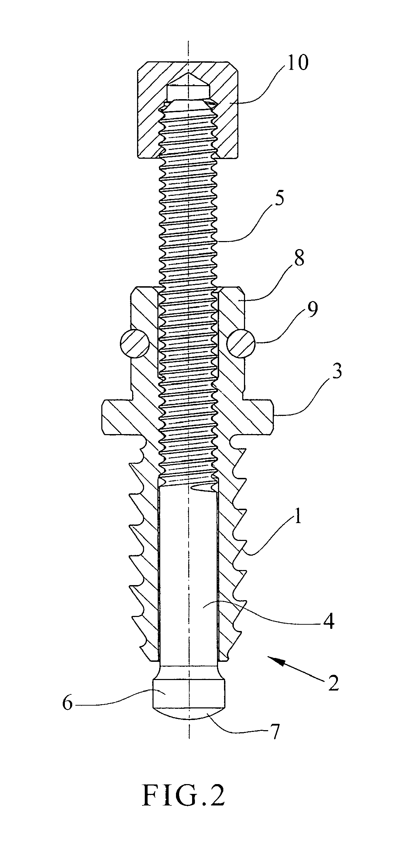

Said body -1- has a longitudinal, for example axial, cavity, as will be seen in Figure 2, in which there is housed a movable screw or rod or "piston" -4-, preferably provided with an upper threaded part -5-, preferably having a fine thread, which screws into body -1- which has a threaded opening of matching shape. Thus screwing of rod -4- into body -1- causes lower head -6- of the rod mentioned to move forward, exerting a slow but progressive action on the sinus cavity in order to achieve the desired shaping.

As will be understood, the precise shape of head -6- will be appropriate to the circumstances found in the patient's sinus cavity, although normally it will have the shape of lower extremity -7- as a common feature, with a structure which is symmetrically curved with respect to the axis of rod -4-, for example, a spherical cap surface.

Above stop shoulder -3-, body -1- has a body -8- of generally prismatic structure having a polygonal cross-section to which the tool for applying the device is coupled, which in a specific embodiment may have a retaining member in the form of a resilient o-ring -9-.

As will be seen, application of the device according to this invention comprises initially fitting body -1- of the self-tapping structure into a previously-prepared space as far as shoulder stop -3-, after which rod -4- may be periodically advanced to again screw progressively into body -1- with the help of an upper head -10- which provides the possibility for the application of a torque.

The specific structure of body -8- makes it possible to easily apply a tool supporting the device for application to the tooth space in the jawbone.

After the operation of adjusting the sinus cavity is complete the whole device is removed so that the desired implant can be fitted.

Although the invention has been described in the description provided with reference to the appended drawings, it will be understood that many variants can be applied thereto with the sole limitation of the appended claims and possible equivalents.

As an example of the variations which may be introduced, mention may be made of different structures of the lower head compressing the sinus cavity in each individual circumstance. Likewise construction of the external body and the movable rod with its shaped head in such a way that it can be completely dimantled at the end of the operation, using the external body as an implant, cannot be ruled out.

## Claims

1. A device for shaping the cavity of the maxillary sinus, **characterised in that** it comprises an external body which can be fitted as an intermediate support to a tooth cavity in the jawbone, wherein the body bears a longitudinally movable rod fitted with a head shaping the base of the sinus cavity by progressive compression, the device having an element for progressively advancing the rod bearing the adjusting head.

2. A device for shaping the cavity of the maxillary sinus according to claim 1, **characterised in that** the intermediate body is provided with an external self-tapping thread with a lower tapering, for attachment to the jawbone.

3. A device for shaping the cavity of the maxillary sinus according to claim 1, **characterised in that** the intermediate body is provided with an external stop shoulder to limit its penetration when it is fitted onto the jawbone.

4. A device for shaping the cavity of the maxillary sinus according to claim 1, **characterised in that** the intermediate body has at the top an element for attaching a positioning tool.

5. A device for shaping the cavity of the maxillary sinus according to claim 4, **characterised in that** the positioning element comprises a polygonal prismatic receiving body and a resilient o-retainer incorporated transversely in the said body.

6. A device for shaping the cavity of the maxillary sinus according to claim 1, **characterised in that** the rod bearing the adjustment head has a threaded part coupled to a threaded longitudinal opening in the body of the device.

7. A device for shaping the cavity of the maxillary sinus according to claim 1, **characterised in that** the head adjusting the sinus cavity has a curved lower surface.

8. A device for shaping the cavity of the maxillary sinus according to claim 7, **characterised in that** the lower extremity shaping the sinus cavity has the form of a spherical cap which is symmetrical with respect to the axis of the movable rod.

9. A device for shaping the cavity of the maxillary sinus according to claim 1, **characterised in that** the movable rod whose lower part is provided with the head shaping the sinus has at the top an element for exerting a torque on the said movable rod.
